# NEUE EUROPÄISCHE PATENTSCHRIFT

(11) **EP 1 627 002 B2**
(45) Veröffentlichungstag und Bekanntmachung des Hinweises auf die Entscheidung über den Einspruch: **18.09.2013**
(45) Hinweis auf die Patenterteilung: 09.01.2008
(21) Anmeldenummer: 04739142.0
(22) Anmeldetag: 06.05.2004
(51) Int. Cl.: C08G 18/08, C08G 18/75, C08G 18/24, C08G 18/48, C08G 18/42, C08G 18/66

(54) **SELBSTEMULGIERENDE WÄSSRIGE POLYURETHANDISPERSIONEN**
SELF-EMULSIFYING AQUEOUS POLYURETHANE DISPERSIONS
DISPERSIONS DE POLYURETHANNE AQUEUSES AUTOEMULSIFIANTES

(30) Priorität: 16.05.2003 DE 10322266
(43) Veröffentlichungstag der Anmeldung: 22.02.2006
(73) Patentinhaber: BASF SE, 67056 Ludwigshafen (DE)
(72) Erfinder: LICHT, Ulrike, 68309 Mannheim (DE); DEUTRICH, Susanne, 48165 Münster (DE); RINK, Heinz-Peter, 48153 Münster (DE); LÖCKEN, Wilma, 45721 Haltern (DE)
(86) Internationale Anmeldenummer: PCT/EP2004/004819
(87) Internationale Veröffentlichungsnummer: WO 2004/101638

(56) Entgegenhaltungen:
- WO-A-02/064657
- WO-A-03/083004
- WO-A-2004/026932
- WO-A1-03/087183
- WO-A1-2004/052956
- DE-A- 10 041 634
- US-A- 3 639 315
- US-A- 4 092 286
- US-A- 4 742 095
- US-A- 4 992 507
- US-A- 5 043 381
- US-A1- 2002 165 314
- US-B1- 6 316 108
- Technisches Merkblatt Lupranol 1000
- Römpp: Safloröl
- BASF THE CHEMICAL COMPANY: 'Polymere' RÖMPP CHEMIE LEXIKON Nr. 9, 1992, Seite 3545

## Beschreibung

Die vorliegende Erfindung betrifft selbstemulgierende wäßrige Primärdispersionen, die Polyurethan enthalten. Außerdem betrifft die vorliegende Erfindung ein Verfahren zur Herstellung dieser Primärdispersionen sowie deren Verwendung.

Aus dem Stand der Technik ist bekannt, daß ionische Polyurethandispersionen für Lacke, Imprägnierungen, Beschichtungen für Textil, Papier, Leder und Kunststoffe geeignet sind. Ebenso sind zahlreiche wäßrige Polyurethan-Klebstoffe bekannt. Die ionische Gruppe trägt hierbei nicht nur zur Wasserdispergierbarkeit bei, sie ist auch ein wichtiger Bestandteil des Rezepts zur Erzeugung von ionischen Wechselwirkungen, die die mechanischen Eigenschaften beeinflussen. Die Herstellung erfolgt bei diesem Stand der Technik nach dem Acetonverfahren oder Prepolymermischverfahren.

Nachteilig ist, daß solche Verfahren aufwendig und teuer sind, insbesondere wenn Lösemittel verwendet werden. Außerdem handelt es sich bei den Reagenzien, mit denen die hydropilen Gruppen eingeführt werden, um teure Spezialchemikalien.

In der deutschen Offenlegungsschrift DE-A1 198 25 453 sind z.B. Dispersionen beschrieben, die Polyurethane enthalten. Hierbei handelt es sich um sogenannte selbstdispergierbare Polyurethane, wobei die Selbstdispergierbarkeit durch Einbau ionisch- oder nicht ionisch-hydrophiler Gruppen erreicht wird. Die betreffenden Dispersionen - werden zur Imprägnierung von Kunstleder eingesetzt.

Aus der WO 00/29465 ist bekannt, daß es möglich ist, Isocyanat und Hydroxylverbindung in wäßrigen Miniemulsionen zu Polyurethanen umzusetzen. Es werden jedoch keine Zusammensetzungen beschrieben, die es erlauben würden, wäßrige Beschichtungen oder Klebstoffe herzustellen.

WO 02/64657 beschreibt PU Minidispersionen mit bestimmten Diolen, mit denen eine Umsetzung zu Polyurethan ohne den Zwischenschritt der Herstellung eines Präpolymers erreicht werden kann. Die dort beschriebenen Zusammensetzungen genügen jedoch nicht den Anforderungen an die Dispergierbarkeit.

Aus dem Stand der Technik sind ferner Polyurethanbeschichtungsstoffe ohne hydrophile Gruppen mit oder ohne Lösemittel bekannt. Diese weisen aber Nachteile im Vergleich zu den beschriebenen Dispersionen auf. Insbesondere sind die ökologischen Probleme des Einsatzes von Lösemitteln oder freiem Isocyanat zu berücksichtigen. Nachteilig sind ferner die im Vergleich zu den Dispersionen niedrigeren Molmassen.

Hinzu kommt, daß bei der Umsetzung von Isocyanat in wäßriger Umgebung immer Verluste durch Harnstoffbildung auftreten, die es unmöglich machen, bekannte Rezepte eines hydrophoben Polyurethans direkt zu übernehmen

Aufgabe der vorliegenden Erfindung ist es nunmehr, ohne Aufwand hoher Scherkräfte feinteilige Primärdispersionen, die Polyurethan enthalten, zur Verfügung zu stellen, die sowohl eine feine Emulgierbarkeit der Rohstoffe als auch eine Dispergierbarkeit der Produkte ermöglichen.

Diese erfindungsgemäße Aufgabe wird gelöst durch wäßrige Primärdispersion, enthaltend mindestens ein Polyurethan, erhältlich durch Umsetzung
a) mindestens eines Polyisocyanats,
b1) mindestens eines Polyols, das die Struktureinheit -[-CH₂-CH₂-O-]_{w}- ein- oder mehrfach aufweist,
b2) gegebenenfalls mindestens eines Polyols, das ein anderes als b1) ist,
b3) gegebenenfalls mindestens einer Verbindung, die mindestens zwei gegenüber Isocyanat reaktive Gruppen, ausgewählt aus Thiol-, primären und sekundären Aminogruppen, aufweist,
b4) gegebenenfalls mindestens ein monofunktionelles Monomer mit einer gegenüber Isocyanat reaktiven Gruppe und
c) gegebenenfalls mindestens eine ionische oder potentiell ionische Aufbaukomponente,
dadurch gekennzeichnet, daß
- w: eine positive ganze Zahl von 2 bis 50 bedeutet,
die Verbindung b1) ein Molgewicht von 800 bis 5000 g/mol aufweist,
der Anteil der Struktureinheiten -[-CH₂-CH₂-O-]-, berechnet mit 44 g/mol, an dem Polyol b1) von 10 bis 90 Gew% ausmacht und
der Anteil der Struktureinheiten -[-CH₂-CH₂-O-]-, berechnet mit 44 g/mol, an der Summe der Komponenten a) + b1) + b2) + b3) +b4) +c) mindestens 3 Gew.-% ausmacht.

In einer bevorzugten Ausführungsform der Erfindung beträgt das Verhältnis von lsocyanatgruppen (a) zu isocyanatreaktiven Gruppen (b) 0,8:1 bis 3:1, vorzugsweise 0,8:1 bis 1,5:1, besonders bevorzugt 1:1.

Als Komponente a) kommen beispielsweise aliphatische, aromatische und cycloaliphatische-Di- und Polyisocyanate mit-einer-NCO Funktionalität von mindestens-1,8; bevorzugt 1,8 bis 5 und besonders bevorzugt 2 bis 4 in Frage, sowie deren Isocyanurate, Biurete, Allophanate und Uretdione.

Bei den Diisocyanaten handelt es sich bevorzugt um Isocyanate mit 4 bis 20 C-Atomen. Beispiele für übliche Diisocyanate sind aliphatische Diisocyanate wie Tetramethylendiisocyanat, Hexamethylendüsocyanat (1,6-Diisocyanatohexan), Octamethyiendiisocyanat, Decamethylendiisocyanat, Dodecamethylendiisocyanat, Tetradecamethylendiisocyanat, Derivate des Lysindiisocyanates, Tetramethylxylylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'- oder 2,4'-Di(isocyanatocyclohexyl)methan, 1-Isocyanato-3,3,5- trimethyl-5-(isocyanatomethyl)cyclohexan(Isophorondiisocyanat), 1,3- oder 1,4-Bis(isocyanatomethyl)cyclohexan oder 2,4-, oder 2,6-Diisocyanato-1-methylcyclohexan sowie aromatische Diisocyanate wie 2,4- oder 2,6-Toluylendiisocyanat und deren Isomerengemische, m- oder p-Xylylendiisocyanat, 2,4'- oder 4,4'-Diisocyanatodiphenylmethan und deren Isomerengemische, 1,3- oder 1,4-Phenylendiisocyanat, 1 -Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat, Tetramethylxylylendiisocyanat, 1,4-Diisocyanatobenzol oder Diphenylether-4,4'-diisocyanat.

Es können auch Gemische der genannten Diisocyanate vorliegen.

Bevorzugt sind aliphatische und cycloaliphatische Diisocyanate, besonders bevorzugt sind Isophorondiisocyanat, Tetramethylxylylendiisocyanat (m-TMXDI) und 1,1-Methylenbis-[4-isocyanato]-cyclohexan (H₁₂MDI).

Als Polyisocyanate kommen Isocyanuratgruppen aufweisende Polyisocyanate, Uretdiondiisocyanate, Biuretgruppen aufweisende Polyisocyanate, Urethan- oder Allophanatgruppen aufweisende Polyisocyanate, Oxadiazintriongruppen enthaltende Polyisocyanate, Uretonimin-modifizierte Polyisocyanate von geradlinigen oder verzweigten C₄-C₂₀-Alkylendiisocyanaten, cycloaliphatischen Diisocyanaten mit insgesamt 6 bis 20 C-Atomen oder aromatischen Diisocyanaten mit insgesamt 8 bis 20 C-Atomen oder deren Gemische in Betracht.

Die einsetzbaren Di- und Polyisocyanate haben bevorzugt einen Gehalt an Isocyanatgruppen (berechnet als NCO, Molekulargewicht = 42) von 10 bis 60 Gew% bezogen auf das Di- und Polyisocyanat(gemisch), bevorzugt 15 bis 60 Gew% und besonders bevorzugt 20 bis 55 Gew%.

Bevorzugt sind aliphatische bzw.cycloaliphatische Di- und Polyisocyanate, z.B. die vorstehend genannten aliphatischen bzw. cycloaliphatischen Diisocyanate, oder deren Mischungen.

Weiterhin bevorzugt sind
1) Isocyanuratgruppen aufweisende Polyisocyanate von aromatischen, aliphatischen und/oder cycloaliphatischen Diisocyanaten. Besonders bevorzugt sind hierbei die entsprechenden aliphatischen und/oder cycloaliphatischen Isocyanato-Isocyanurate und insbesondere die auf Basis von Hexamethylendiisocyanat und Isophorondiisocyanat. Bei den dabei vorliegenden Isocyanuraten handelt es sich insbesondere um Tris-isocyanatoalkyl- bzw. Tris-isocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.%, insbesondere 15 bis 25 Gew.% und eine mittlere NCO-Funktionalität von 3 bis 4,5.
2) Uretdiondiisocyanate mit aromatisch, aliphatisch und/oder cycloaliphatisch gebundenen Isocyanatgruppen, vorzugsweise aliphatisch und/oder cycloaliphatisch gebundenen und insbesondere die von Hexamethylendiisocyanat oder Isophorondüsocyanat abgeleiteten. Bei Uretdiondiisocyanaten handelt es sich um cyclische Dimerisierungsprodukte von Diisocyanaten.
   Die Uretdiondiisocyanate können in den erfindungsgemäßen Zubereitungen als alleinige Komponente oder im Gemisch mit anderen Polyisocyanaten, insbesondere den unter 1) genannten, eingesetzt werden.
3) Biuretgruppen aufweisende Polyisocyanate mit aromatisch, cycloaliphatisch oder aliphatisch gebundenen, bevorzugt cycloaliphatisch oder aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate weisen im allgemeinen einen NCO-Gehalt von 18 bis 22 Gew.-% und eine mittlere NCO-Funktionalität von 3 bis 4,5 auf.
4) Urethan- und/oder Allophanatgruppen aufweisende Polyisocyanate mit aromatisch, aliphatisch oder cycloaliphatisch gebundenen, bevorzugt aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit mehrwertigen Alkoholen wie z.B. Trimethylolpropan, Neopentylglykol, Pentaerythrit, 1,4-Butandiol, 1,6-Hexandiol, 1,3-Propandiol, Ethylenglykol, Diethylenglykol, Glycerin, 1,2-Dihydroxypropan oder deren Gemischen erhalten werden können. Diese Urethan- und/oder Allophanatgruppen
3) aufweisenden polyisocyanate haben Im allgemeinen einen NCO-Gehalt von 12 bis 20 Gew.-% und eine mittlere NCO-Funktionalität von 2,5 bis 3.
4) Oxadiazintriongruppen enthaltende Polyisocyanate, vorzugsweise von Hexamethylendiisocyanat oder Isophorondiisocyanat abgeleitet, Solche Oxadiazintriongruppen enthaltenden Polyisocyanate sind aus Diisocyanat und Kohlendioxid herstellbar .
5) Uretonimin-modifizierte Polyisocyanate.

Die Polyisocyanate 1) bis 6) können im Gemisch, gegebenenfalls auch Im Gemisch mit Diisocyanaten, eingesetzt werden.

Als Reaktionspartner der Polyisocyanate a) werden Verbindungen b) mit gegenüber Isocyanat reaktiven Gruppen eingesetzt, die erfindungsgemäß unterteilt werden in b1) bis b4), wobei b2), b3) und b4) optional sind.

Beispielsweise geeignete gegenüber isocyanat reaktive Gruppen sind Hydroxyl-, Thiolsowie primäre und sekundäre Aminogruppen. Vorzugsweise werden hydroxylgruppenhaltige Verbindungen oder Monomere, b1) und gegebenenfalls b2), verwendet. Daneben können auch noch Verbindungen b3) verwendet werden, die mindestens zwei gegenüber Isocyanat reaktive Gruppen aufweisen, ausgewählt aus Thiol-, primären und sekundären Aminogruppen.

Geeignete Verbindungen b1) sind solche Polyole, die Struktureinheit -[-CH₂-CH₂-O-]_{w}- ein oder mehrfach aufweisen, wobei der Anteil der Struktureinheiten -[-CH₂-CH₂-O-]-, berechnet mit 44 g/mol, an dem Polyol b1) einen Gewichtsanteil von 10 bis 90 Gew%, bevorzugt von 10 bis 50 und besonders bevorzugt von 12-36 Gew% ausmacht

Darin bedeutet w eine positive ganze Zahl von 2 bis 50, besonders bevorzugt 5 bis 50, ganz besonders bevorzugt 10 bis 50 und insbesondere 20 bis 50.

Bevorzugt weisen die Verbindungen b1) ein Molgewicht von mindestens 500 g/mol auf, besonders bevorzugt von 800 bis 5000 g/mol.

Bei den Polyolen b1) handelt es sich bevorzugt um gemischt-alkoxylierte Polyole, bei denen ein geeignetes Startmolekül mit Ethylenoxid und mindestens einem weiteren Alkylenoxid alkoxyliert wird.

Startmoleküle sind beispielsweise Wasser, Neopentylglykol, Hydroxypivalinsäureneopentylglykolester, 2-Ethyl-1,3-Propandiol, 2-Methyl-1,3-Propandiol, 3-Ethyl-1,5-pentandiol, 3-Methyl-1,5-pentandiol, 2-Ethyl-1,3-Hexandiol, 2,4-Diethyl-oktan-1,3-diol, Hydrochinon, Bisphenol A, Bisphenol F, Bisphenol B, Bisphenol S, 2,2-Bis(4-hydroxycyclohexyl)propan, 1,1-, 1,2-, 1,3- und 1,4-Cyclohexandimethanol, 1,2-, 1,3- oder 1,4-Cyclohexandiol, 1,2-Propandiol, Ethylenglykol, 2,2-Dimethyl-1,2-Ethandiol, 1,3-Propandiol, 1,2-Butandiol, 1,3-Butandiol, 1,4-Butandiol, 1,6-Hexandiol, 1,8-Octandiol, Trimethylolbutan, Trimethylolpropan, Trimethylolethan, Pentaerythrit, Glycerin, Ditrimethylolpropan, Dipentaerythrit, Sorbit, Mannit, Diglycerol, Threit, Erythrit, Adonit (Ribit), Arabit (Lyxit), Xylit, Dulcit (Galactit), Maltit oder Isomalt.

Alkylenoxide sind beispielsweise Propylenoxid, *iso*-Butylenoxid, Vinyloxiran und/oder Styroloxid, bevorzugt sind Propylenoxid und/oder *iso*-Butylenoxid, besonders bevorzugt ist Propylenoxid.

In Betracht kommen ferner Glycidylether aliphatischer oder aromatische Polyole. Derartige Produkte werden im Handel in großer Zahl angeboten. Besonders bevorzugt sind Polyglycidylverbindungen vom Bisphenol A-, -F- oder -B-Typ, deren vollständig hydrierte Derivate und Glycidylether mehrwertiger Alkohole, z.B. des 1,4-Butandiol, 1,4-Cyclohexandimethanol, Neopentylglykol, des 1,6-Hexandiol, des Glycerin, Trimethylolpropan und des Pentaerythrit. Beispiele für derartige Polyepoxidverbindungen sind Epikote^{®} 812 (Epoxidwert: ca. 0,67 mol/100g) und Epikote^{®} 828 (Epoxidwert: ca. 0,53 mol/100g), Epikote^{®}1001, Epikote^{®} 1007 und Epikote^{®} 162 (Epoxidwert: ca. 0,61 mol/100g) der Firma Resolution Performance Products, Rütapox^{®} 0162 (Epoxidwert: ca. 0,58 mol/100g), Rütapox^{®} 0164 (Epoxidwert: ca. 0,53 mol/100g) und Rütapox^{®} 0165 (Epoxidwert: ca. 0,48 mol/100g) der Firma Bakelite AG, Araldit^{®} DY 0397 (Epoxidwert: ca. 0,83 mol/100g) der Firma Vantico AG.

Bevorzugt sind Bisphenol-A-diglycidylether, 1,4-Butandiol-diglycidylether, Trimethylolpropantriglycidylether und Pentaerythrittetraglycidylether.

Die Alkylenoxide können im Gemisch in der Alkoxylierung eingesetzt werden, so daß ein statistisches Copolymer entsteht, oder bevorzugt können die reinen Alkylenoxide aufeinanderfolgend eingesetzt werden, so daß ein Block-Copolymer entsteht. Besonders bevorzugt ist ein Block-Copolymer, bei dem als letzter Alkoxylierungsschritt Ethylenoxid eingesetzt wird, so daß das Polyol b1) mindestens eine primäre Alkoholgruppe als endständige Struktureinheit -CH₂-O-H aufweist, ganz besonders bevorzugt weist es zwei derartige endständige Struktureinheiten auf.

Bei den Polyolen b1) kann es sich auch um einen Polyesterpolyole handeln, die durch Umsetzung von mindestens einem zwei- oder mehrwertigen Alkohol mit mindestens einer zwei- oder mehrwertigen Carbonsäure erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden.

Die Polycarbonsäuren können aliphatisch, cycloaliphatisch, araliphatisch, aromatisch oder heterocyclisch sein und ggf., z.B. durch Halogenatome, substituiert und/oder ungesättigt sein.

Als Beispiele hierfür seien genannt: Korksäure, Azelainsäure, Phthalsäure, lsophthalsäure, Natrium-Sulfo-Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Alkenylbernsteinsäure, Fumarsäure, dimere Fettsäuren. Bevorzugt sind Dicarbonsäuren der allgemeinen Formel HOOC-(CH₂)_{y}-COOH, wobei y eine Zahl von 1 bis 20, bevorzugt eine gerade Zahl von 2 bis 20 ist, z.B. Bernsteinsäure, Adipinsäure, Dodecandicarbonsäure und Sebacinsäure.

Als Polyole für die Polyesterolherstellung kommen z.B. Ethylenglykol, Propan-1,2-diol, Propan-1,3-diol, Butan-1,3-diol, Butan-1,4-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ- OH, wobei x eine Zahl von 1 bis 20, bevorzugt eine gerade Zahl von 2 bis 20 ist. Beispiele hierfür sind Ethylenglykol, Butan-1,4-diol, Hexan-1,6-diol, Octan-1,8-diol und Dodecan-1,12-diol. Weiterhin bevorzugt sind Neopentylglykol und Pentandiol-1,5.

Um erfindungsgemäß mindestens eine Struktureinheit -[-CH₂-CH₂-O-]- in das Polesterol einzubringen, muß mindestens eine Aufbaukomponente des Polyesterols Ethylenglykol, ein Polyethylenglykol mit einer Molmasse zwischen 106 und 2000, bevorzugt zwischen 106 und 1000 und besonders bevorzugt zwischen 106 und 500, oder ein oben beschriebenes Copolymer von Ethylenoxid mit einem weiteren Alkylenoxid sein.

Geeignet sind auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinhelt auch durch einen C₁- bis C₄-Alkylrest substituiert sein kann. Beispiele sind epsilon-Caprolacton, β-Propiolecton, γ-Butyrolacton und/oder Methyl-epsilon-caprolacton sowie deren Gemische.

Geeignete Starterkomponenten sind z.B. die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der polymerisate von Lactonen können auch die entsprechenden, chemisch äquivalenten Polykondensate der den Lactonen entsprechenden Hydroxycarbonsäuren, eingesetzt werden.

Als Polyole b2) kommen sämtliche bekannten zwei- oder höherwertigen Alkohole in Betracht, soweit sie nicht unter die oblge Liste der Polyole b1) fallen. Die Polyole b2) können also auch ein niedrigeres Molgewicht als 500 g/mol aufweisen sowie einen Anteil der Struktureinheiten -[-CH₂-CH₂-O-]-, berechnet mit 44 g/mol**,** von weniger als 10 oder mehr als 90 Gew% aufweisen.

Beispiel sind Poly-THF mit einer Molmasse zwischen 162 und 1458, Poly-1,3-propandiol mit einer Molmasse zwischen 134 und 1178, Poly-1,2-prapandiol mit einer Molmasse zwischen 134 und 1178, Trimethylolbutan, Trimethylolpropan, Trimethylolethan, Glycerin, Ditrimethylolpropan, Dipentaerythnt, Sorbit, Mannit, Diglycerol, Threit, Erythrit, Adonit (Ribit), Arabit (Lyxit), Xylit, Dulolt (Galactit), Maltit, Isomalt und Polyesterole und Polyetherole auf dieser Basis.

Ebenfalls möglich sind Polyester aus Ausgangsstoffen, wie sie oben genannt wurden. Ebenfalls können Polyole auf Basis OH-Gruppen funktionalisierter Polybutadiene, Polyacrylate, Polysiloxane und Polycarbonate als Monomere b2) eingesetzt werden.

Der Anteil der Struktureinheiten -[-CH₂-CH₂-O-]-, berechnet mit 44 g/mol, an der Summe der Komponenten a) + b1) + b2) + b3) + b4) +c) beträgt erfindungsgemäß mindestens 3 Gew%, bevorzugt mindestens 5 Gew% und besonders bevorzugt mindestens 7,5 Gew%. In der Regel beträgt der Anteil nicht mehr als 90 Gew%, bevorzugt nicht mehr als 75 und besonders bevorzugt nicht mehr als 50 Gew%.

Beispiele geeigneter Monomere b3) sind Hydrazin, Hydrazinhydrat, Ethylendiamin, Propylendiamin, Diethylentrlamin, Dipropylentriamin, Isophorondiamin, 1,4-Cyclohexyldiamin, Piperazin oder Thiole wie 1,2-Ethanthiol.

In untergeordneter Menge können auch monofunktionelle Monomere b4) mit einer gegenüber Isocyanat reaktiven Gruppe eingesetzt werden. Ihr Anteil sollte 10 mol% bzgl. NCO-Gruppen in der Komponente a) nicht überschreiten.

Beispiele für b4) sind Methanol, Ethanol, iso-Propanol, n-Propanol, n-Butanol, iso-Butanol, sek-Butanol, tert-Butanol, Ethylenglykolmonomethylether, Ethylenglykolmonoethylether, 1,3-Propandiolmonomethylether, n-Hexanol, n-Heptanol, n-Octanol, n-Decanol, n-Dodecanol (Laurylalkohol) und 2-Ethylhexanol.

Weiterhin kann noch mindestens eine ionische oder potentiell ionische Aufbaukomponente c) vorhanden sein. Bevorzugt werden die Polyurethane der erfindungsgemäßen Dispersionen jedoch ohne Komponenten c) aufgebaut.

Als Komponente c) kommen Verbindungen mit mindestens einer gegenüber Isocyanat reaktiven Gruppe und mindestens einer dispergieraktiven Gruppe in Betracht.

Solche Verbindungen werden beispielsweise durch die allgemeine Formel

RG-R¹-DG

dargestellt, worin
- RG: mindestens eine gegen Isocyanat reaktive Gruppe bedeutet,
- DG: mindestens eine dispergieraktive Gruppe und
- R¹: einen 1 bis 20 Kohlenstoffatome enthaltenden aliphatischen, cycloaliphatischen oder aromatischen Rest.

Beispiele für RG sind -OH, -SH, -NH₂ oder -NHR², worin R² Methyl, Ethyl, *iso*-Propyl, n-Propyl, n-Butyl, *iso*-Butyl, *sek*-Butyl, *tert*-Butyl, Cyclopentyl oder Cyclohexyl sein kann.

Bevorzugt handelt es sich bei der Komponente c) z.B. um Mercaptoessigsäure, Mercaptopropionsäure, Thiomilchsäure, Mercaptobernsteinsäure, Glycin, Iminodiessigsäure, Sarkosin, Alanin, β-Alanin, Leucin, Isoleucin, Aminobuttersäure, Hydroxyessigsäure, Hydroxypivalinsäure, Milchsäure, Hydroxybemsteinsäure, Hydroxydecansäure, Dimethylolpropionsäure, Dimethylolbuttersäure, Ethylendiamintriessigsäure, Hydroxydodecansäure, Hydroxyhexadecansäure, 12-Hydroxystearinsäure, Aminonaphthalincarbonsäure, Hydroxethansulfonsäure, Hydroxypropansulfonsäure, Mercaptoethansulfonsäure, Mercaptopropansulfonsäure, Aminomethansulfonsäure, Taurin, Aminopropansulfonsäure sowie deren Alkali- Erdalkali- oder Ammoniumsalze und besonders bevorzugt um die genannten Monohydroxycarbon- und -sulfonsäuren sowie Monoaminocarbon- und -sulfonsäuren.

Zur Herstellung der Dispersion werden die vorgenannten Säuren, falls es sich nicht schon um Salze handelt, teilweise oder vollständig neutralisiert, bevorzugt mit Alkalisalzen oder Aminen, bevorzugt tertiären Aminen.

Die Herstellung der erfindungsgemäßen Dispersion wird mittels Emulsionspolymerisation durchgeführt.

Bei diesen Verfahren wird in der Regel in einem ersten Schritt aus den Monomeren a) und b) sowie gegebenenfalls c), der notwendigen Menge an Emulgatoren und/oder Schutzkolloid, ggf. hydrophobem Zusatz und Wasser eine Mischung hergestellt und daraus eine Emulsion erzeugt.

Bevorzugt wird in einem ersten Schritt die organische Phase homogen hergestellt und in einem zweiten Schritt diese organische Phase in eine Wasserphase gegeben oder eine Wasserphase in die so hergestellte organische Phase gegeben.

Gleichermaßen bevorzugt kann man einen Teil der Aufbaukomponenten vorlegen und den restlichen Teil zudosieren. Bevorzugt werden die Aufbaukomponenten a) und solche mit einem Molgewicht über 500 g/mol vorgelegt und die restlichen Aufbaukomponenten zugegeben, besonders bevorzugt kann man die Aufbaukomponenten b1) vorlegen und die restlichen Aufbaukomponenten zugeben.

Erfindungsgemäß ist in der so hergestellten Dispersion die mittlere Teilchengröße (z-Mittelwert), gemessen mittels dynamischer Lichtstreuung mit dem Malvern® Autosizer 2 C, im allgemeinen <1000 nm, bevorzugt <500 nm und besonders bevorzugt < 100 nm. Im Normalfall beträgt der Durchmesser 20 bis 80 nm.

Zur Erzeugung der Emulsion ist erfindungsgemäß ein Energieeintrag von nicht mehr als 10⁸ W/m³ erforderlich.

Zweckmäßig ist es, die Herstellung der Emulsion so schnell durchzuführen, daß die Emulgierzeit klein im Vergleich zur Reaktionszeit der Monomere untereinander und mit Wasser ist.

Eine bevorzugte Ausgestaltung des erfindungsgemäßen Verfahrens besteht darin, das man die Gesamtmenge der Emulsion unter Kühlen auf Temperaturen unterhalb von Raumtemperatur herstellt. Bevorzugt wird die Emulsionsherstellung in weniger als 10 in bewerkstelligt. Durch Erhöhung der Temperatur der Emulsion unter Rühren wird der Umsatz vervollständigt. Die Reaktionstemperaturen liegen zwischen Raumtemperatur und 120° C, bevorzugt zwischen 60° und 100° C. Falls erforderlich kann Druck angelegt werden, um leicht siedende Komponenten flüssig zu halten.

Generell werden bei der Erzeugung von Emulsionen ionische und/oder nichtionische Emulgatoren und/oder Schutzkolloide bzw. Stabilisatoren als grenzflächenaktive Verbindungen verwendet.

Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Als Emulgatoren kommen sowohl anionische, kationische als auch nichtionische Emulgatoren in Betracht. Vorzugsweise werden als begleitende grenzflächenaktive Substanzen ausschließlich Emulgatoren eingesetzt, deren Molekulargewichte im Unterschied zu den Schutzkolloiden üblicherweise unter 2000 g/mol liegen. Selbstverständlich müssen im Falle der Verwendung von Gemischen grenzflächeaktiver Substanzen die Einzelkomponenten miteinander verträglich sein, was im Zweifelsfall anhand weniger, einfacher Vorversuche überprüft werden kann. Vorzugsweise werden anionische und nichtionische Emulgatoren als grenzflächenaktive Substanzen verwendet. Gebräuchliche begleitende Emulgatoren sind z.B. ethoxylierte Fettalkohole (EO-Grad: 3 bis 50, Alkylrest: C₈- bis C₃₆), ethoxylierte Mono-, Di- und Tri- Alkylphenole (EO-Grad: 3 bis 50, Alkylrest: C₄- bis C₉), Alkalimetallsalze von Dialkylestern der Sulfobernsteinsäure sowie Alkali- und/oder -Ammoniumsalze von Alkylsulfaten (Alkylrest: C₈-bis C₁₂), von ethoxylierten Alkanolen (EO-Grad: 4 bis 30, C₉), von Alkylsulfonsäuren (Alkylrest: 6₁₂- bis C₁₈) und von Alkylarsulfonsäuren (Alkylrest: C₉- bis C₁₈).

Geeignete Emulgatoren finden sich auch in Houben-Weyl, Methoden der organischen Chemie Band 14/1, Makromolekulare Stoffe, Georg Thieme Verlag, Stuttgart, 1961, Seiten 192 bis 208.

Handelsnamen von Emulgatoren sind z.B. Dowfax ® 2 A1 der Firma Dow, Emulan ® NP 50, Emulan ® OG, Emulgator 825 und Emulgator 825 S, Nekanil ® 904 S der Firma BASF, Texapon ® NSO der Firma Henkel Corporation, Lumiten ® 1-RA und Lumiten E 3065 der Firma BASF, Dextrol ® OC 50 der Firma AVEBE GmbH, Steinapol NLS der Firma Goldschmidt REWO GmbH etc.

Bezogen auf die in der wäßrigen Emulsion enthaltende Menge an Monomeren liegt diese Emulgatorenmenge in der Regel im Bereich von 0,1 bis 10 Gew.%. Wie bereits erwähnt, können den Emulgatoren Schutzkolloide an die Seite gegeben werden, die die disperse Verteilung der letztlich resultierenden wäßrigen Polymerisatdispersion zu stabilisieren vermögen. Unabhängig von der eingesetzten Emulgatormenge können die Schutzkolloide in Mengen bis zu 50 Gew.%, beispielsweise in Mengen von 1 bis 30 Gew.% bezogen auf die Monomere eingesetzt werden.

Als Costabilisatoren als hydrophober Zusatzstoff können den Monomeren Stoffe in Mengen von 0,01 Gew.% bis 10 Gew.%, bevorzugt 0,1 -1 Gew%, zugesetzt werden, die eine Löslichkeit in Wasser von weniger als 5 x 10⁻⁵, bevorzugt 5 x 10⁻⁷ g/l aufweisen. Beispiele sind Kohlenwasserstoffe wie Hexadecan, halogenierte Kohlenwasserstoffe, Silane, Siloxane, hydrophobe Öle (Olivenöl), Farbstoffe etc. An ihrer Stelle können auch blockierte Polyisocyanate die Funktion des Hydrophobs übernehmen.

Bevorzugt wird die Reaktion in Gegenwart eines Katalysators duchgeführt.

In einer bevorzugten Ausführung wird zunächst eine Mischung aus den Monomeren, Emulgatoren und/oder Schutzkolloiden, sowie gegebenenfalls hydrophobem Zusatz und Wasser hergestellt. Dann wird eine Emulsion erzeugt und diese unter Rühren erwärmt. Nach Erreichen der erforderlichen Reaktionstemperatur wird der Katalysator über die Wasserphase zugegeben. Besonders bevorzugt wird ein hydrophober Katalysator über die Wasserphase zugesetzt. Die Wasserlöslichkeit des hydrophoben Katalysators liegt vorzugsweise bei ≤ 1 g/l.

Selbstverständlich kann der Katalysator aber auch schon in die Ölphase der Emulsion, d. h. in die Monomerphase, gegeben werden, bevor dispergiert wird oder sofort nach der Herstellung der Emulsion zur Wasserphase gegeben werden. Anschließend wird unter Rühren erwärmt.

Als Katalysatoren kommen prinzipiell alle in der Polyurethanchemie üblicherweise verwendeten Katalysatoren in Betracht.

Diese sind beispielsweise organische Amine, insbesondere tertiäre aliphatische, cycloaliphatische oder aromatische Amine, und/oder Lewis-saure organische Metallverbindungen. Als Lewis-saure organische Metallverbindungen kommen z.B. Zinnverbindungen in Frage, wie beispielsweise Zinn-(II)-salze von organischen Carbonsäuren, z.B. Zinn(II)-acetat, Zinn(II)-octoat, Zinn(II)-ethylhexoat und Zinn(II)-laurat und die Dialkylzinn(IV)-salze von organischen Carbonsäuren, z.B.Dimethylzinn-diacetat, Dibutylzinndiacetat, Dibutylzinn-dibutyrat, Dibutylzinn-bis(2-ethylhexanoat), Dibutylzinn-dilaurat, Dibutylzinn-maleat; Dioctylzinn-dilaurat und Diodtylzinn-diacetat. Auch Metallkomplexe wie Acetylacetonate des Eisens, Titans, Aluminiums, Zirkons, Mangans, Nickels und Cobalts sind möglich. Weitere Metallkatalysatoren werden von Blank et al. in Progress in Organic Coatings, 1999, Vol. 35, Seiten 19-29 beschrieben.

Bevorzugte Lewis-saure organische Metallverbindungen sind Dimethylzinn-diacetat, Dibutylzinn-dibutyrat, Dibutylzinn-bis(2-ethylhexanoat), Dibutylzinn-dilaurat, Diocytzinndilaurat, Zirkon-Acetylacetonat und Zirkon-2,2,6,6-tetramethyl-3,5-heptandionat.

Auch Wismut-und Cobaltkatalysatoren sowie Cäsiumsalze können als hydrophobe Katalysatoren eingesetzt werden. Als Cäsiumsalze kommen dabei solche Verbindungen in Betracht, in denen folgende Anionen eingesetzt werden: F⁻, Cl⁻, ClO⁻, ClO₃⁻, ClO₄⁻, Br⁻, J⁻, JO₃⁻, CN⁻, OCN⁻, NO₂⁻, NO₃⁻, HCO₃⁻, CO₃²⁻, S²⁻, SH⁻, HSO₃⁻, SO₃²⁻, HSO₄^{-,} SO₄²⁻, S₂O₂²⁻_{,} S₂O₄²⁻, S₂O₅²⁻, S₂O₆²⁻, S₂O₇²⁻, S₂O₈²⁻, H₂PO₂-, H₂PO₄⁻, HPO₄²-, PO₄³⁻, P₂O₇⁴⁻, (OCₙH₂ₙ₊₁)⁻, (CₙH₂ₙ₋₁O₂)⁻, (CₙH₂ₙ₋₃O₂)⁻ sowie (Cₙ₊₁H₂ₙ₋₂O₄)²⁻, wobei n für die Zahlen 1 bis 20 steht.

Bevorzugt sind dabei Cäsiumcarboxylate, bei denen das Anion den Formeln (CₙH₂ₙ₋₁O₂)⁻ sowie (Cₙ₊₁H₂ₙ₋₂O₄)²⁻ mit n gleich 1 bis 20, gehorcht. Besonders bevorzugte Cäsiumsalze weisen als Anionen Monocarboxylate der allgemeinen Formel (CₙH₂ₙ₋₁O₂)⁻ auf, wobei n für die Zahlen 1 bis 20 steht. Hierbei sind insbesondere zu erwähnen Formiat, Acetat, Propionat, Hexanoat und 2-Ethylhexanoat.

Als übliche organische Amine seien beispielhaft genannt: Triethylamin, 1,4-Diazabicyclo-[2,2,2]-octan, Tributylamin, Dimethylbenzylamin, N,N,N',N'-Tetramethylethylendiamin, N,N,N',N'-Tetramethylbutandiamin, N,N,N',N'-Tetramethylhexan-1,6-diamin, Dimethylcyclohexylamin, Dimethyldodecylamin, Pentamethyldipropylentriamin, Pentamethyldiethylentriamin, 3-Methyl-6-dimethylamino-3-azapentol, Dimethylaminopropylamin, 1,3-Bisdimethylaminobutan, Bis-(2-dimethylaminoethyl)ether, N-Ethylmorpholin, N-Methylmorpholin, N-Cyclohexylmorpholin, 2-Dimethylaminoethoxyethanol, Dimethylethanolamin, Tetramethylhexamethylendiamin, Dimethylamino-N-me-thylethanolamin, N-Methylimidazol, N-Formyl-N,N'-dimethylbutylendiamin, N-Dimethyl-aminoethylmorpholin, 3,3'-Bis-dimethylamino-di-n-propylamin und/oder 2,2'-Dipiparazindiisopropylether, Dimethylpiparazin, Tris-(N,N-dimethylaminopropyl)-s-hexahydrotriazin, Imidazole wie 1,2-Dimethylimidazol, 4-Chlor-2,5-dimethyl-1-(N-methylaminoethyl)-imidazol, 2-A-minopropyl-4,5-dimethoxy-1-methylimidazol, 1-Aminopropyl-2,4,5-tributylimidazol, 1-Aminoethyl-4-hexylimidazol, 1-Aminobutyl-2,5-dimethylimidazol, 1-(3-Aminopropyl)-2-ethyl-4-methylimidazol, 1-(3-Aminopropyl)imidazol und/oder 1-(3-Aminopropyl)-2-methylimidazol.

Bevorzugte organische Amine sind Trialkylamine mit unabhängig voneinander zwei C₁- bis C₄-Alkylresten und einem Alkyl- oder Cycloalkylrest mit 4 bis 20 Kohlenstoffatomen, beispielsweise Dimethyl-C₄-C₁₅-Alkylamin wie Dimethyldodecylamin oder Dimethyl-C₃-C₈-Cycloalkylamin. Ebenfalls bevorzugte organische Amine sind bicyclische Amine, die gegebenenfalls ein weiteres Heteroatom wie Sauerstoff oder Stickstoff enthalten können, wie beispielsweise 1,4-Diazabicyclo-[2,2,2]-octan.

Selbstverständlich können auch Gemische aus zwei oder mehreren der genannten Verbindungen als Katalysatoren eingesetzt werden.

Die Katalysatoren werden vorzugsweise in einer Menge von 0,0001 bis 10 Gew.-%, besonders bevorzugt in einer Menge von 0,001 bis 5 Gew.%, bezogen auf die Gesamtmenge der eingesetzten Monomere, eingesetzt.

Die Polyurethan-Dispersionen können handelsübliche Hilfs- und Zusatzstoffe wie Treibmittel, Entschäumer, Emulgatoren, Verdickungsmittel, Vernetzer, Füllstoffe, Thixotropiermittel, Farbmittel wie Farbstoffe und Pigmente, Antioxidantien, Oxidationsinhibitoren, Stabilisatoren, Aktivatoren (Beschleuniger), Entgasungsmittel, Glanzmittel, antistatische Agentien, Flammschutzmittel, Verlaufshilfsmittel, Bindemittel, Antischaummittel, Duftstoffe, oberflächenaktive Agentien, Viskositätsmodifikatoren, Weichmacher, Plastifizierer, klebrigmachende Harze (Tackifier), Chelatbildner oder Verträglichkeitsmittel (compatibilizer) enthalten.

Die erfindungsgemäße Dispersion wird zur Herstellung von wäßrigen Beschichtungsstoffen, Klebstoffen und Dichtungsmassen verwendet, beispielsweise zur Beschichtung von Holz, Holzfumier, Papier, Pappe, Karton, Textil, Leder, Vlies, Kunststoffoberflächen, Glas, Keramik, mineralische Baustoffe, Metalle oder beschichtete Metalle. Sie kann auch zur Herstellung von Filmen oder Folien, sowie zum Imprägnieren von z.B. Textilien oder Leder verwendet werden, als Dispergiermittel und Pigmentanreibemittel, als Primer und Haftvermittler, Hydrophobiermittel sowie als Waschmittelzusatz und als Zusatz in kosmetischen Zubereitungen. Weiterhin können die erfindungsgemäßen Dispersionen zur Herstellung von Formkörpern oder Hydrogelen, z.B. für optische Linsen verwendet werden.

Ferner können die erfindungsgemäßen Dispersionen als Saat in der Durchführung einer Saatpolymerisation eingesetzt werden. Dazu können die erfindungsgemäßen Dispersionen beispielsweise in einem Reaktor emulgiert und zur Reaktion gebracht werden und im Anschluß kann die Polymerisation durchgeführt werden, für die die erfindungsgemäßen Dispersionen als Saat dienen (in situ Saat). Es können die erfindungsgemäßen Dispersionen selbstverständlich auch gesondert hergestellt werden, in einem Reaktor vorgelegt werden und die Saatpolymerisation anschließend gestartet werden.

Die Durchführung solcher Saatpolymerisationen ist dem Fachmann bekannt und beispielsweise beschrieben in Baumstark und Schwartz, Dispersionen für Bautenfar ben,Vincentz Verlag 2001 S.42 und Encyclopedia of polymer science and technology, plastics, resins, rubbers fibers, Vol 5, J.Wiley and Sons, New York 1966, Seite 847.

Bevorzugt wird die Saatpolymerisation so durchgeführt, wie beschrieben in US 5,189,107, Spalte 2, Z. 29 bis Sp. 9, Z. 55 oder in WO 97/12921 ab S. 3, Z. 19 und dort bevorzugt wie beschrieben in S. 22, Z. 9 bis S. 23, Z. 8. Auf die Offenbarung in diesen beiden Dokumente sei hiermit ausdrücklich Bezug genommen und sie seien Bestandteil der vorliegenden Beschreibung.

Im folgenden wird die Erfindung anhand von Beispielen näher beschrieben.

In dieser Schrift verwendete ppm- und Prozentangaben beziehen sich, falls nicht anders angegeben, auf Gewichtsprozente und -ppm.

### Beispiele

### Beispiel 1:

9,5 g eines Blockcopolymers aus Propylenoxid (PO) und Ethylenoxid (EO) (endständig) mit 21,3 Gew% EO und einer OH-Zahl gem. DIN 53240 (OHZ) von 26,7 mg KOH/g werden mit 1,07 g 3-Methyl-pentandiol-1,5 und 2,5 g Isophorondiisocyanat (IPDI) gemischt. Die Ölphase wird in 28,8 g vollentsalztem (VE) Wasser mit 3,4 g Steinapol NLS 15%ig der Firma Goldschmidt REWO GmbH mit einem Magnetrührer bei 750 Upm gerührt. Nach 10 min ist die Mischung homogen. Die Emulsion wird auf 50°C erwärmt und 2 Tropfen Dibutylzinndilaurat (DBTL) zugegeben. Nach 5 h wird über 40µm filtriert und der Feststoffgehalt zu 28,8% bestimmt Die Teilchengröße beträgt 35,5 nm.

### Beispiel 2:

8,7 g eines Blockcopolymers aus PO und EO (endständig) mit 13 Gew% EO und einer OHZ von 35,2 mgKOH/g werden mit 1,29 g 3-Methyl-pentandiol-1,5 und 3 g IPDI gemischt. Die Ölphase wird in 28,7 g VE-Wasser mit 3,4 g Steinapol NLS 15%ig gerührt. Nach 10 min ist die Mischung homogen. Die Emulsion wird auf 50°C erwärmt und 2 Tropfen DBTL zugegeben. Nach 5 h wird über 40µm filtriert und der Feststoffgehalt zu 28,1% bestimmt. Die Teilchengröße beträgt 45,8 nm.

### Beispiel 3

12 g eines Blockcopolymers aus PO und EO(endständig) mit 21,3 Gew% EO und einer OHZ von 26,7 mgKOH/g werden mit 0,13 g Butandiol-1,4 und 1,07 g 4,4'-/2,4'-Methylendi(phenylisocyanat) (MDI) gemischt. Die Ölphase wird in 29 g VE-Wasser mit 3,5 g Steinapol NLS 15%ig gerührt. Nach 10 min ist die Mischung homogen. Die Emulsion wird auf 50°C erwärmt und 2 Tropfen DBTL zugegeben. Nach 5 h wird über 40µm filtriert und der Feststoffgehalt zu 28,1 % bestimmt. Die Teilchengröße beträgt 156 nm.

### Beispiel 4

7 g eines Blockcopolymers aus PO und EO(endständig) mit 18,6 Gew% EO und einer OHZ von 55,2 mg KOH/g werden mit 1,6 g 3-Methyl-1,5-pentandiol, 0,31 g Hexadecan und 3,8 g IPDI gemischt. Die Ölphase wird in 28,1 g VE-Wasser mit 3,3 g Steinapol NLS 15%ig gerührt. Nach 10 min ist die Mischung homogen. Die Emulsion wird auf 60°C erwärmt und 2 Tropfen K-Kat XC-6212 von King Industries zugegeben. Nach 5 h wird über 40µm filtriert und der Feststoffgehalt zu 28,2 bestimmt. Die Teilchengröße beträgt 31,2 nm.

### Beispiel 5: Herstellung eines Polyesterdiols:

328,7 g Isophthalsäure, 1003,4 g Adipinsäure, 351,7 g Neopentylglykol, 605,5 g Hexandiol-1,6 und 1024,5 g Polyethylenglykol 400 werden eingewogen, aufgeschmolzen und bei max 232°C bis zu einer Säurezahl von 5,5 mg/g gefahren. Das Material wird bei 80°C abgelassen.
Säurezahl: 5,11 mg KOH/g gemäß DIN 53402
OH-Zahl: 87,7 mg KOH/g gemäß DIN 53240

### Beispiel 6:

25,7 g des Polyesterdiols aus Beispiel 5 werden mit 3,6 g Butandiol-1,4 und 13,4 g IPDI gemischt. Die Ölphase wird in 97 g VE-Wasser mit 5,7g Steinapol NLS 15%ig gerührt. Nach 10 min ist die Mischung homogen. Die Emulsion wird auf 60°C erwärmt und 6 Tropfen DBTL zugegeben. Nach 5 h wird über 40µ filtriert und der Feststoffgehalt zu 27% bestimmt. Die Teilchengröße beträgt 65,6 nm .

### Beispiel 7:

9,6 g eines Blockcopolymers aus PO und EO (endständig) mit 21,3 Gew% EO und einer OHZ von 26,7 mgKOH/g werden mit 0,95 g Neopentylglykol und 2,54 g IPDI gemischt. Die Ölphase wird in 28,8 g VE-Wasser mit 3,5 g Steinapol NLS 15%ig gerührt. Nach 10 min ist die Mischung homogen. Die Emulsion wird auf 50°C erwärmt und 2 Tropfen DBTL zugegeben. Nach 5 h wird über 40 µm filtriert und der Feststoffgehalt zu 26,9 % bestimmt. Die Teilchengröße beträgt 76,7 nm.

### Beispiel 8:

8,7 g eines Blockcopolymers aus PO und EO (endständig) mit 13 Gew% EO und einer OHZ von 35,2 mgKOH/g werden mit 1,14 g Neopentylglykol und 3 g IPDI gemischt. Die Ölphase wird in 28,3 g VE-Wasser mit 3,4 g Steinapol NLS 15%ig gerührt. Nach 10 min ist die Mischung homogen. Die Emulsion wird auf 50°C erwärmt und 2 Tropfen DBTL zugegeben. Nach 5 h wird über 40µm filtriert und der Feststoffgehalt zu 27,3 % bestimmt. Die Teilchengröße beträgt 50,2 nm.

## Patentansprüche

1. Wäßrige Primärdispersion, enthaltend mindestens ein Polyurethan, erhältlich durch Umsetzung
a) mindestens eines Polyisocyanats,
b1) mindestens eines Polyols, das die Struktureinheit -[-CH₂-CH₂-O-]_{w}- ein- oder mehrfach aufweist,
b2) gegebenenfalls mindestens eines Polyols, das ein anderes als b1) ist,
b3) gegebenenfalls mindestens einer Verbindung, die mindestens zwei gegenüber Isocyanat reaktive Gruppen, ausgewählt aus Thiol-, primären und sekundären Aminogruppen, aufweist,
b4) gegebenenfalls mindestens ein monofunktionelles Monomer mit einer gegenüber Isocyanat reaktiven Gruppe und
c) gegebenenfalls mindestens eine ionische oder potentiell ionische Aufbaukomponente,
**dadurch gekennzeichnet, daß**
w eine positive ganze Zahl von 2 bis 50 bedeutet,
die Verbindung b1) ein Molgewicht von 800 bis 5000 g/mol aufweist,
der Anteil der Struktureinheiten -[-CH₂-CH₂-O-]-, berechnet mit 44 g/mol, an dem Polyol b1) von 10 bis 90 Gew% ausmacht und
der Anteil der Struktureinheiten -[-CH₂-CH₂-O-]-, berechnet mit 44 g/mol, an der Summe der Komponenten a) + b1) + b2) + b3) + b4) + c) mindestens 3 Gew% ausmacht.

2. Primärdispersion gemäß Anspruch 1, **dadurch gekennzeichnet, daß** es sich bei dem Polyol b1) um ein Ethylenoxid und Propylenoxid enthaltendes Copolymer handelt.

3. Primärdispersion gemäß Anspruch 2, **dadurch gekennzeichnet, daß** es sich bei dem Copolymer um ein Block-Copolymer handelt.

4. Primärdispersion gemäß einem der vorstehenden Ansprüche, **dadurch gekennzeichnet, daß** das Polyol b1) mindestens eine endständige Struktureinheit -CH₂-O-H aufweist.

5. Primärdispersion gemäß Anspruch 1, **dadurch gekennzeichnet, daß** es sich bei dem Polyol b1) um ein Polyesterol handelt.

6. Primärdispersion gemäß einem der vorstehenden Ansprüche, **dadurch gekennzeichnet, daß** die mittlere Teilchengröße, gemessen mittels dynamischer Lichtstreuung mit dem Malvem® Autosizer 2 C unter 100 nm beträgt.

7. Verfahren zur Herstellung einer Primärdispersion gemäß einem der vorstehenden Ansprüche, **dadurch gekennzeichnet, daß** die Komponenten a), b1), gegebenenfalls b2), gegebenenfalls b3) und gegebenenfalls b4) in Gegenwart von Wasser umgesetzt werden.

8. Verfahren zur Herstellung einer Primärdispersion gemäß einem der Ansprüche 1 bis 6, **dadurch gekennzeichnet, daß** die Dispergierung mit Scherkräften unter 10⁸ W/m³ erfolgt.

9. Verwendung von Primärdispersionen gemäß einem der Ansprüche 1 bis 6 in wäßrigen Beschichtungsstoffen, Klebstoffen und Dichtungsmassen, zur Beschichtung von Holz, Holzfumier, Papier, Pappe, Karton, Textil, Leder, Vlies, Kunststoffoberflächen, Glas, Keramik, mineralischen Baustoffen, Metallen oder beschichteten Metallen, in der Herstellung von Filmen oder Folien, zum Imprägnieren von Textilien oder Leder, als Dispergiermittel, als Pigmentanreibemittel, als Primer, als Haftvermittler, als Hydrophobiermittel, als Waschmittelzusatz oder als Zusatz in kosmetischen Zubereitungen oder zur Herstellung von Formkörpem oder Hydrogelen und als Saat in der Durchführung einer Saatpolymerisation.

## Claims

1. An aqueous primary dispersion comprising at least one polyurethane obtainable by reacting
a) at least one polyisocyanate,
b1) at least one polyol containing the structural unit -[-CH₂-CH₂-O-]- one or more times,
b2) optionally at least one polyol other than b1),
b3) optionally at least one compound containing at least two isocyanate-reactive groups selected from thiol groups and primary and secondary amino groups,
b4) optionally at least one monofunctional monomer having an isocyanate-reactive group, and
c) optionally at least one ionic or potentially ionic synthesis component,
wherein
w is a positive integer from 2 to 50, the compound b1) has a molar weight of from 800 to 5000 g/mol, the fraction of the structural units -[-CH₂-CH₂-O-]-, calculated at 44 g/mol, in the polyol b1) is from 10 to 90% by weight and
the fraction of the structural units -[-CH₂-CH₂-O-]-, calculated at 44 g/mol, in the sum of the components a) + b1) + b2) + b3) + b4) + c) is at least 3% by weight.

2. The primary dispersion according to claim 1, wherein the polyol b1) is a copolymer comprising ethylene oxide and propylene oxide.

3. The primary dispersion according to claim 2, wherein the copolymer is a block copolymer.

4. The primary dispersion according to any of the preceding claims, wherein the polyol b1) includes at least one terminal structural unit -CH₂-O-H.

5. The primary dispersion according to claim 1, wherein the polyol b1) is a polyesterol.

6. The primary dispersion according to any of the preceding claims, wherein the average particle size as measured by dynamic light scattering using the Malvern® Autosizer 2 C is below 100 nm.

7. A process for preparing a primary dispersion according to any of the preceding claims, which comprises reacting components a), b1), optionally b2), optionally b3), and optionally b4) in the presence of water.

8. A process for preparing a primary dispersion according to any of claims 1 to 6, wherein dispersing takes place with shear forces below 10⁸ W/m³.

9. The use of a primary dispersion according to any of claims 1 to 6 in aqueous coating materials, adhesives, and sealants, for coating wood, wood veneer, paper, board, card, textile, leather, nonwoven, plastics surfaces, glass, ceramic, mineral building materials, metals, including coated metals, in producing films or sheets, for impregnating textiles or leather, as dispersants, as pigment grinding compositions, as primers, as adhesion promoters, as hydrophobicizers, as laundry detergent additives or as an additive to cosmetic formulations or for producing moldings or hydrogels and as seed in the implementation of a seed polymerization.

## Revendications

1. Dispersion aqueuse primaire, contenant au moins un polyuréthanne, que l'on peut obtenir par réaction de :
a) au moins un polyisocyanate,
b1) au moins un polyol présentant une ou plusieurs fois l'unité structurelle -[-CH₂-CH₂-O-]_{w}-,
b2) le cas échéant au moins un polyol différent de b1),
b3) le cas échéant au moins un composé présentant au moins deux groupes réactifs aux isocyanates, choisis parmi des groupes thiol, amino primaire et secondaire,
b4) le cas échéant au moins un monomère monofonctionnel comportant un groupe réactif aux isocyanates et
c) le cas échéant au moins un composant constitutif ionique ou potentiellement ionique,
**caractérisée en ce que** :
w représente un nombre entier positif de 2 à 50,
le composé b1) présente un poids molaire de 800 à 5000 g/mole,
la fraction des unités structurelles -[-CH₂-CH₂-O-]-, calculée sur la base de 44 g/mole, représente de 10 à 90% en poids du polyol b1), et
la fraction des unités structurelles -[-CH₂-CH₂-O-]-, calculée sur la base de 44 g/mole, représente au moins 3% en poids de la somme des composants a) + b1) + b2) + b3) + b4) + c).

2. Dispersion primaire suivant la revendication 1, **caractérisée en ce que** le polyol b1) est un copolymère contenant de l'oxyde d'éthylène et de l'oxyde de propylène.

3. Dispersion primaire suivant la revendication 2, **caractérisée en ce que** le copolymère est un copolymère séquencé.

4. Dispersion primaire suivant l'une quelconque des revendications précédentes, **caractérisée en ce que** le polyol b1) présente au moins une unité structurelle -CH₂-O-H en position terminale.

5. Dispersion primaire suivant la revendication 1, **caractérisée en ce que** le polyol b1) est un polyestérol.

6. Dispersion primaire suivant l'une quelconque des revendications précédentes, **caractérisée en ce que** la taille moyenne de particules, mesurée par diffusion lumineuse dynamique au moyen de l'Autosizer 2 C Malvern® est inférieure à 100 nm.

7. Procédé de préparation d'une dispersion primaire suivant l'une quelconque des revendications précédentes, **caractérisé en ce que** l'on fait réagir les composants a), b1), le cas échéant b2), le cas échéant b3) et le cas échéant b4) en présence d'eau.

8. Procédé de préparation d'une dispersion primaire suivant l'une quelconque des revendications précédentes, **caractérisé en ce que** la dispersion a lieu avec des forces de cisaillement de moins de 10⁸ W/m³.

9. Utilisation de dispersions primaires suivant l'une quelconque des revendications 1 à 6, dans des revêtements à base aqueuse, des adhésifs et des masses d'étanchéité, pour la protection de bois, de contreplacages de bois, de papier, de carton-pâte, de carton, de textiles, de cuirs, de non-tissés, de surfaces de matières synthétiques, de verre, de céramique, de matériaux de construction minéraux, de métaux ou de métaux revêtus, dans la préparation de films ou de feuilles, pour l'imprégnation de textiles ou de cuirs, en tant qu'agents de dispersion, en tant qu'agents de broyage de pigments, en tant qu'apprêts, en tant qu'agents adhésifs, en tant qu'agents d'hydrophobisation, en tant qu'additifs pour produits lessiviels ou comme additif dans des préparations cosmétiques ou pour la préparation de corps moulés ou d'hydrogels et en tant qu'agent d'ensemencement dans l'exécution d'une polymérisation par ensemencement.
